(19) Europäisches Patentamt
European Patent Office
Office européen des brevets

(11) EP 3 490 695 B1

(12) **EUROPÄISCHE PATENTSCHRIFT**

(45) Veröffentlichungstag und Bekanntmachung des Hinweises auf die Patenterteilung:
**20.05.2020 Patentblatt 2020/21**

(21) Anmeldenummer: **17818452.9**

(22) Anmeldetag: **01.12.2017**

(51) Int Cl.:
***B01D 67/00*** *(2006.01)* ***B01D 69/02*** *(2006.01)*
***B01D 71/10*** *(2006.01)*

(86) Internationale Anmeldenummer:
**PCT/EP2017/081179**

(87) Internationale Veröffentlichungsnummer:
**WO 2018/141437 (09.08.2018 Gazette 2018/32)**

(54) **VERNETZTE UNVERSTÄRKTE CELLULOSEHYDRAT-MEMBRAN, VERFAHREN ZU IHRER HERSTELLUNG UND IHRE VERWENDUNG**

CROSSLINKED UNREINFORCED CELLULOSEHYDRATE-MEMBRANE, PROCESS FOR PRODUCTION THEREOF AND USE THEREOF

MEMBRANE EN HYDRATE DE CELLULOSE RÉTICULÉE NON RENFORCÉE, PROCÉDÉ POUR LA PRODUIRE ET UTILISATION DE LADITE MEMBRANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2017 DE 102017000919**

(43) Veröffentlichungstag der Anmeldung:
**05.06.2019 Patentblatt 2019/23**

(73) Patentinhaber: **Sartorius Stedim Biotech GmbH**
**37079 Göttingen (DE)**

(72) Erfinder:
- **VAN DER KRUIJS, Sandra**
**34125 Kassel (DE)**
- **REICHE, Annette**
**37079 Göttingen (DE)**
- **NIÑO-AMÉZQUITA, Gabriel**
**37073 Göttingen (DE)**
- **VILLAIN, Louis**
**37083 Göttingen (DE)**
- **HÖRL, Hans-Heinrich**
**37120 Bovenden (DE)**
- **MELZNER, Dieter**
**37075 Göttingen (DE)**
- **BÄTHE, Franziska**
**37170 Uslar (DE)**

(74) Vertreter: **Müller-Boré & Partner**
**Patentanwälte PartG mbB**
**Friedenheimer Brücke 21**
**80639 München (DE)**

(56) Entgegenhaltungen:
**US-A1- 2008 245 736**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 490 695 B1

## Beschreibung

Die vorliegende Erfindung betrifft vernetzte unverstärkte Cellulosehydrat-Membranen, ein Verfahren zu deren Herstellung und die Verwendung der erfindungsgemäßen Membranen zur Filtration wässriger Medien. Insbesondere betrifft die vorliegende Erfindung plissierfähige Cellulosehydrat-Membranen, welche sich gegenüber Cellulosehydrat-Membranen des Standes der Technik durch ein verringertes Schrumpf- und Quellverhalten sowie hohe mechanische Stabilität auszeichnen und für Membranfiltervorrichtungen für die Sterilfiltration geeignet sind.

Im Stand der Technik werden verschiedene Materialien als Basismaterial für Filtrationsmembranen beschrieben, darunter auch Cellulosehydrat-Membranen. Cellulosehydrat-Membranen weisen eine einzigartige Kombination vorteilhafter Eigenschaften auf, wie Hydrophilie, die sich in ihrer Wasserbenetzbarkeit ohne Verwendung von Tensiden ausdrückt, geringe Proteinadsorption, hohe thermische Beständigkeit und Beständigkeit gegenüber den meisten organischen Lösungsmitteln. Allerdings weisen Cellulosehydrat-Membranen auch einige Nachteile bei der Filtration wässriger Systeme auf, wie beispielsweise die Unbeständigkeit gegen starke Laugen, starke Säuren und Cellulasen sowie die Freisetzung sogenannter "Pseudopyrogene" .

WO 95/32793 A1 offenbart in diesem Zusammenhang eine vernetzte Cellulosehydrat-Membran, die gegen alkalische Verbindungen, Säuren und Cellulasen beständig ist und keine Pseudopyrogene abgibt. Die Membran ist durch Vernetzung einer regenerierten Cellulosehydrat-Membran, d.h. einer verseiften Celluloseacetat-Membran, mit einem wasserlöslichen Diepoxid mit einer Wasserlöslichkeit von mindestens 0,2 mol/l herstellbar, wobei 5-Ethyl-1,3-diglycidyl-5-methylhydantoin als einziges wasserlösliches Diepoxid erwähnt wird. Die Vernetzung erfolgt in wässrigen Alkalihydroxid-Lösungen. In diesem Zusammenhang beschreibt WO 95/32793 A1, dass bei Verwendung wasserlöslicher Diepoxide als Vernetzungsmittel selbst hohe Vernetzungsgrade von über 0,4 von keiner Beeinträchtigung der Hydrophilie der vernetzten Cellulosehydrat-Membran begleitet sind.

Bei der Herstellung von Cellulosehydrat-Filtrationsmembranen aus Celluloseester-Membranen wird der Verseifungsprozess bevorzugt so durchgeführt, dass sich die poröse Struktur der Membran möglichst nicht ändert. In WO 2007/017085 A2 und US 2008/0179248 A1 wird ein Verfahren zur Herstellung von vernetzten Cellulosehydrat-Membranen beschrieben, das in der simultanen Verseifung und Vernetzung von Celluloseester-Membranen besteht und für Filtrations- und Adsorptionsmembranen gleichermaßen geeignet sein soll. Eines der Ziele der dort beschriebenen Erfindung ist die Verseifung und Vernetzung des Celluloseesters unter Bedingungen, die die Struktur und Permeabilität der Membran nicht beeinflussen.

WO 2008/095709 A1 offenbart ebenfalls vernetzte Cellulosehydrat-Membranen, welche aus Celluloseacetat-Membranen durch Vernetzung in alkalischem Medium mit difunktionellen Epoxiden, welche von Diglycidylethern abgeleitet sind, erhältlich sind. Basierend auf dem Offenbarungsgehalt der Ausführungsbeispiele erfolgen Verseifung und Vernetzung in Analogie zu WO 2007/017085 A2 und US 2008/0179248 A1 in einem "Eintopf"-Verfahren. Die erhaltenen Membranen sind dadurch gekennzeichnet, dass die Volumenquellung in wässrigen Lösungen zwischen 40 und 250 % beträgt.

US 2008/0245736 A1 offenbart hydrophile vernetzte Nanofiltrationsmembranen aus Cellulosehydrat, welche beständig gegenüber polar aprotischen Solventien sind. Die Vernetzung erfolgt durch Zugabe jeweils einer Diepoxidverbindung, welche von einem Diglycidylether abgeleitet ist, wobei insbesondere entweder 1,4-Butandioldiglycidylether (BuDGE) oder Ethylenglykoldiglycidylether (EDGE) ohne nähere Angabe des Molekulargewichtes oder der Anzahl an Ethylenoxid-Wiederholungseinheiten des EDGE verwendet werden.

EP 1 470 854 A1 offenbart die Herstellung von vernetzten Cellulosehydrat-Membranen durch Umsetzung von Cellulosehydrat-Membranen mit spezifischen Alkandioldiglycidylethern, beispielsweise in wässriger Natronlauge unter Verwendung von BuDGE.

Die in WO 95/32793 A1 offenbarten vernetzten Cellulosehydrat-Membranen werden von der Anmelderin als Hydrosart®-Membranen vertrieben, welche immer vliesverstärkt und nicht für die Sterilfiltration geeignet sind. Bislang existiert keine unverstärkte plissierfähige Hydrosart®-Membran. Aufgrund des hohen Vernetzungsgrades dieser Membranen, der zwischen 0,05 und 0,5 liegt, sind diese für Plissierungen trotz eines hohen Weichmacheranteils von beispielweise mehr als 10 Gew.-% Glycerin zu spröde. Diese Cellulosehydrat-Membranen werden diskontinuierlich bei einer Reaktionstemperatur zwischen 0 und 50 °C und einer Reaktionszeit zwischen 48 bis 96 Stunden vernetzt. Allerdings führt diese Prozessführung auch zu Nachteilen hinsichtlich der Membranqualität, wie beispielsweise den sog. "Rollenanfang/Rollenende-Effekten", d.h. Durchfluss- und Dickenunterschiede von einigen Prozenten, oder schlechte Wickelqualität. Daher sind diese Membranen nicht sicher sterilfiltrierend. Darüber hinaus werden für Anwendungen in der Sterilfiltration unverstärkte Membranen gefordert, um eine Abgabe von Partikeln aus der Verstärkung in das Filtrat zu vermeiden.

Der Erfindung liegt daher die Aufgabe zugrunde, vernetzte unverstärkte Cellulosehydrat-Membranen bereitzustellen, welche die vorstehend genannten Nachteile der im Stand der Technik bekannten Cellulosehydrat-Membranen überwinden. Insbesondere liegt der vorliegenden Erfindung die Aufgabe zugrunde, eine vernetzte unverstärkte Cellulosehydrat-Membran bereitzustellen, die kostengünstig produzierbar ist, die eine hohe Konsistenz bezüglich des Membrandurchflusses und der Membrandicke aufweist, eine hohe mechanische Stabilität, insbesondere eine hohe Flexibilität bei geringem Weichmachergehalt, besitzt, die eine Plissierung ohne Verwendung von Dampf ermöglicht, d.h. ausgezeichnete Plissierfähigkeiten besitzt, ausgezeichnete Quell-Schrumpf-Eigenschaften, d.h. geringe Dimensionsänderung bei Quellung bzw. Trocknung mit wässrigen Medien, sowie eine ausgezeichnete Wickelqualität aufweisen soll und nach Plissierung zur Sterilfiltration verwendet werden kann.

Diese Aufgabe wird durch die in den Ansprüchen gekennzeichneten Ausführungsformen der vorliegenden Erfindung gelöst.

Insbesondere wird erfindungsgemäß eine vernetzte unverstärkte Cellulosehydrat-Membran bereitgestellt, welche mit mindestens zwei verschiedenen Vernetzungsmitteln vernetzt ist, ausgewählt aus Diepoxidverbindungen, die unterschiedliche Abstandshaltergruppen zwischen den endständigen Epoxidgruppen aufweisen, wobei die Cellulosehydrat-Membran einen Vernetzungsgrad von 0,04 bis 0,10, eine Dimensionsänderung der Membranfläche in wässrigen Lösungen von 25 % oder weniger und eine Bruchdehnung gemäß DIN EN ISO 527-1 und DIN EN ISO 527-3 bei einer relativen Luftfeuchtigkeit von 40 bis 50 % und bei einer Temperatur von 23 bis 25 °C von mindestens 20 % aufweist.

Erfindungsgemäß ist die vernetzte unverstärkte Cellulosehydrat-Membran erhältlich durch ein Verfahren, welches die folgenden Schritte umfasst:

- Bereitstellen einer Cellulosehydrat-Membran;
- Vernetzen der Cellulosehydrat-Membran durch Imprägnieren mit einer Vernetzerlösung und anschließende Temperaturerhöhung;
- Spülen der vernetzten Membran in wässrigen Lösungen und Imprägnierung mit einer Weichmacherlösung, wie z.B. einer glycerinhaltigen Lösung; und
- Trocknung der Membran bei einer Temperatur von 20 °C bis 150 °C,

wobei die Vernetzung in wässrig alkalischer Lösung mit mindestens zwei verschiedenen Vernetzungsmitteln durchgeführt wird, gemäß den Ansprüchen ausgewählt aus Diepoxidverbindungen, die unterschiedliche Abstandshaltergruppen zwischen den endständigen Epoxidgruppen aufweisen, und wobei die Vernetzung bei einer Temperatur von 75 °C bis 150 °C für 0,1 bis 60 Minuten durchgeführt wird.

Überraschenderweise wurde festgestellt, dass die Vernetzung einer Cellulosehydrat-Membran bei Temperaturen zwischen 75 °C und 150 °C für 0,1 bis 60 Minuten bei Verwendung einer wässrig alkalischen Lösung und Verwendung von mindestens zwei verschiedenen Diepoxidverbindungen als Vernetzungsmittel zu einer Cellulosehydrat-Membran führt, welche ein verbessertes Quell- und Schrumpfverhalten, d.h. bei Quellung mit Wasser und Trocknung eine geringere Dimensionsänderung der Membranfläche, aufweist. Die Kombination von zwei unterschiedlichen Vernetzungsmitteln und die Anwendung eines Heißvernetzungsprozesses, d.h. bei hohen Temperaturen zwischen 75 °C und 150 °C für 0,1 bis 60 Minuten, resultiert zudem in einer Cellulosehydrat-Membran, die überraschenderweise eine im Vergleich zu im Stand der Technik bekannten Cellulosehydrat-Membranen höhere mechanische Stabilität bei gleichzeitig reduzierter Verringerung der Dimensionsänderung zwischen trockenem und nassem Zustand aufweist. Die verbesserte mechanische Stabilität drückt sich insbesondere in ausgezeichneten Plissiereigenschaften aus, da eine hohe mechanische Flexibilität bzw. hohe Bruchdehnung selbst bei geringem Weichmachergehalt erhalten werden kann und eine Plissierung auch ohne Verwendung von Dampf ermöglicht wird. Zudem weisen die erfindungsgemäßen Cellulosehydrat-Membranen eine ausgezeichnete Wickelqualität auf.

Gemäß der vorliegenden Erfindung werden im Vernetzungsschritt mindestens zwei verschiedene Diepoxidverbindungen als Vernetzungsmittel eingesetzt, die im Folgenden auch als Vernetzungsmittel A und Vernetzungsmittel B bezeichnet werden. Erfindungsgemäß handelt es sich bei der Vernetzungslösung um eine wässrige alkalische Lösung, welche zwei verschiedene Diepoxidverbindungen als Vernetzungsmittel enthält, die sich in der Abstandshaltergruppe zwischen den endständigen Epoxidgruppen unterscheiden. Als "Abstandshaltergruppe" wird erfindungsgemäß die Einheit zwischen den endständigen Epoxidgruppen verstanden.

Besonders bevorzugt werden als Vernetzungsmittel A Glycidylether der folgenden Formel verwendet:

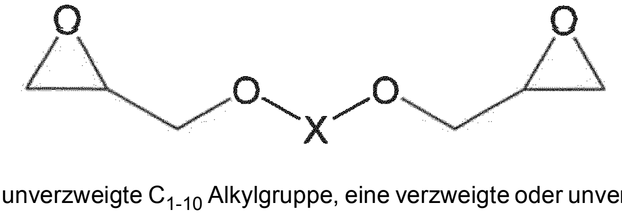

wobei X eine verzweigte oder unverzweigte $C_{1-10}$ Alkylgruppe, eine verzweigte oder unverzweigte $C_{3-10}$ Cycloalkylgruppe, oder eine substituierte oder unsubstituierte $C_{6-20}$ Arylgruppe darstellt.

Als Vernetzungsmittel B werden Glycidylether der folgenden Formel verwendet:

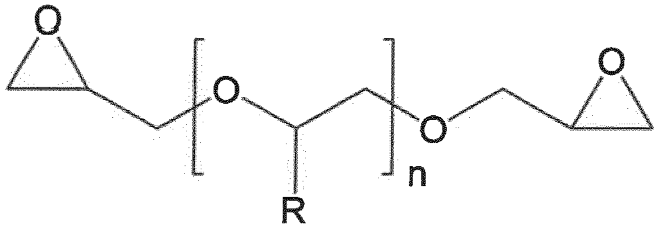

wobei n 3 bis 50, und R Wasserstoff oder eine Methylgruppe darstellt.

Als Beispiele für die vorstehend genannten Diepoxide können beispielsweise Ethylenglykoldiglycidylether (EDGE), Propylenglykoldiglycidylether 1,4-Butandioldiglycidylether (BuDGE), Neopentylglykoldiglycidylether, 1,4-Cyclohexandimethanoldiglycidylether, Resorcinoldiglycidylether, Poly(ethylenglykol)diglycidylether oder Poly(propylenglykol)diglycidylether genannt werden.

Gemäß einer bevorzugten Ausführungsform der vorliegenden Erfindung werden als Vernetzungsmittel A mindestens ein Alkandioldiglycidylether, besonders bevorzugt BuDGE oder EDGE, und als Vernetzungsmittel B mindestens ein Poly(ethylenglykol)diglycidylether (PEG-DGE) und/oder Poly(propylenglykol)-diglycidylether (PPG-DGE) verwendet. Als geeignete Poly(ethylenglykol)-diglycidylether und Poly(propylenglykol)diglycidylether können erfindungsgemäß solche mit einer Anzahl an Polyethylen- bzw. Polypropylen-Wiederholungseinheiten $n_p$ im Bereich von $n_p$ = 3 bis 50 verwendet werden.

In einer besonders bevorzugten Ausführungsform enthält die wässrige Vernetzungslösung ein Gemisch aus BuDGE und PEG-DGE.

Das Verhältnis der mindestens zwei verschiedenen Diepoxidverbindungen sowie deren Konzentration in der Vernetzungslösung sind nicht besonders beschränkt. Vorzugsweise umfasst die Vernetzungslösung 0,01 bis 0,5 mol/kg (Mol Vernetzer pro Kilogramm Lösung) Vernetzungsmittel A und 0,01 bis 0,5 mol/kg Vernetzungsmittel B, wobei 0,05 bis 0,3 mol/kg jeweils besonders bevorzugt sind. Das Verhältnis der verschiedenen Diepoxidverbindungen in der Vernetzungslösung beträgt vorzugsweise 10-90:90-10, besonders bevorzugt 20-80:80-20.

Die Vernetzung findet erfindungsgemäß in einer wässrig alkalischen Lösung statt und kann in einem wässrigen Medium oder auch in einem Gemisch aus wässrigem Medium und organischem Lösungsmittel stattfinden. Vorzugsweise wird die Vernetzung in einem wässrigen Medium durchgeführt, welches kein organisches Lösungsmittel enthält.

Ferner ist es bevorzugt, einen Vernetzungskatalysator, wie beispielsweise eine starke Base, insbesondere Natriumhydroxid (NaOH), Lithiumhydroxid (LiOH), und/oder Kaliumhydroxid (KOH), zur Beschleunigung der Vernetzung von Cellulosehydrat mit den Vernetzungsmitteln zu verwenden. Die Konzentration des Vernetzungskatalysators in der Vernetzungslösung unterliegt keiner besonderen Einschränkung, beträgt vorzugsweise jedoch 0,02 bis 0,2 mol/kg (Mol Vernetzungskatalysator pro Kilogramm Lösung), besonders bevorzugt 0,1 bis 0,15 mol/kg.

Ferner ist es möglich, dass die Vernetzungslösung weitere Additive, insbesondere Neutralsalze, enthält. Der Zusatz eines Neutralsalzes, wie beispielsweise Natriumchlorid oder Natriumsulfat, zur Vernetzungslösung steigert dabei die Reaktionsausbeute der Vernetzungsreaktionen.

Wie vorstehend beschrieben erfolgt die Vernetzung erfindungsgemäß bei hohen Temperaturen von 75 °C bis 150 °C für 0,1 bis 60 Minuten, wobei eine Temperatur in einem Bereich von 80 °C bis etwa 140 °C bei einer Vernetzungsdauer von 0,5 bis 40 Minuten bevorzugt ist. Besonders bevorzugt ist eine Temperatur von 90 °C bis 130 °C bei einer Vernetzungsdauer von 1 bis 20 Minuten. Der Erhitzungsschritt kann mit einem Ofen, einer heißen Oberfläche oder mittels Wärmestrahlung erfolgen.

Nach der Vernetzung wird die Membran mit Wasser, wässrigen Lösungen oder schwach sauren Medien, wie beispielsweise verdünnter 0,5 bis 5 Gew.-%iger Essigsäure, neutral gewaschen und anschließend mit Wasser zur Entfernung der löslichen Bestandteile gewaschen. Anschließend wird die erhaltene Membran mit einer Weichmacherlösung, beispielweise mit einer glycerinhaltigen Lösung von 0,5 bis 30 Gew.-% Glycerin, imprägniert.

Die nach dem Vernetzungsschritt erhaltene erfindungsgemäße Cellulosehydrat-Membran weist einen Vernetzungsgrad von 0,04 bis 0,10 auf. Als Maß für den Vernetzungsgrad (DX), welcher maximal den Wert 3 annehmen kann, wird erfindungsgemäß der mittlere Substitutionsgrad der Anhydroglucose-Einheiten der Cellulose, im Folgenden halbe Cellobioseeinheit genannt, durch Reaktion mit dem Vernetzungsmittel gewählt, wie dies anhand der folgenden Gleichung dargestellt ist:

$$DX = N_V \times [n_{Vges} / (n_{Vges} + n_{(1/2)Cellobiose})]$$

mit

$$n_{(1/2)Cellobiose} = m_{NettoC} / M_{(1/2)Cellobiose}$$

und mit

$$n_{Vges} = (m_{NettoCx} - m_{NettoC}) / [[(m_{V1} / (m_{V1} + m_{V2})) \times M_{V1}] + [(m_{V2} / (m_{V1} + m_{V2})) \times M_{V2}]],$$

wobei $nv_{ges}$ die Stoffmenge in mol des gesamten Vernetzungsmittels (nachfolgend auch Vernetzer genannt) und n(1/2)Cellobiose die Stoffmenge in mol bezogen auf die halbe Cellobioseeinheit der verwendeten Cellulosehydrat-Membran, $m_{NettoC}$ die Trockenmasse der verwendeten Cellulosehydrat-Membran in g und $M_{(1/2)}$cellobiose die Molmasse der halben Cellobioseeinheit (162 g/mol) darstellt und Nv der Anzahl der reaktiven Gruppen pro Vernetzermolekül entspricht, $m_{NettoCx}$ die Trockenmasse der vernetzten und $m_{NettoC}$ die Masse der Cellulosehydrat-Membran (Ausgangsmembran) in g darstellt. Die Stoffmenge der Vernetzer berechnet sich aus der Trockenmassendifferenz der vernetzten Membran $m_{NettoCx}$ und der Ausgangsmembran $m_{NettoC}$, und den Molmassen $M_{v1}$ und $M_{v2}$ in g/mol sowie den in der Reaktionslösung verwendeten Massenanteilen der Vernetzer $m_{v1}$ und $m_{v2}$. Bei den für die Herstellung der erfindungsgemäßen Membran verwendeten Vernetzermolekülen sind pro Vernetzermolekül zwei reaktive Gruppen, d.h. die endständigen Epoxidgruppen, vorhanden, sodass Nv gleich zwei ist.

Der theoretisch maximal mögliche Wert von DX liegt aufgrund der drei Hydroxygruppen der halben Cellobioseeinheit bei 3. Vorzugsweise beträgt der Vernetzungsgrad DX mindestens 0,045, mehr bevorzugt mindestens 0,05. Die Obergrenze für den Vernetzungsgrad DX liegt erfindungsgemäß bei 0,10. Obwohl mit höheren Vernetzungsgraden eine höhere mechanische und chemische Stabilität der Membran erreicht werden kann, führt dies zu einer Verhärtung des Membranmaterials und folglich zu einer erhöhten Sprödigkeit. Um die Plissierfähigkeit solcher spröden Membranen zu gewährleisten, bedarf es in nachteiliger Weise eines hohen Weichmacheranteils und/oder einer Verstärkung.

Erfindungsgemäß besitzt die vernetzte Cellulosehydrat-Membran auch als unverstärkte Membran ausgezeichnete Plissierfähigkeiten.

Gemäß der vorliegenden Erfindung beträgt die Dimensionsänderung der Membranfläche der Cellulosehydrat-Membran in wässrigen Lösungen 25 % oder weniger, vorzugsweise 20 % oder weniger, besonders bevorzugt 19 % oder weniger. Die Bestimmung der Dimensionsänderung der Membranfläche (Quell- und Schrumpfverhalten) erfolgt erfindungsgemäß, indem die Dimensionen Länge und Breite der zuvor vollständig mit Wasser benetzten unverstärkten vernetzten Cellulosehydrat-Membranen gemessen wurden. Danach werden die Dimensionen nach Trocknung bei 140 °C bis zur Gewichtskonstanz erneut gemessen. Die Bestimmung der Dimensionsänderung (DF) der Membranfläche erfolgt anhand folgender Gleichung:

$$DF\,[\%] = ((a_2 \times b_2 / a_1 \times b_1) - 1) \times 100$$

wobei $a_1$ und $b_1$ Länge und Breite der getrockneten Membran und $a_2$ und $b_2$ die Länge und Breite der mit Wasser benetzten Membran sind.

Ein weiteres Merkmal der erfindungsgemäßen Membran ist, dass die Bruchdehnung gemäß DIN EN ISO 527-1 und DIN EN ISO 527-3 bei einer relativen Luftfeuchtigkeit von 40 bis 50 % und bei einer Temperatur von 23 bis 25 °C mindestens 20 % beträgt. Vorzugsweise liegt die Untergrenze der Bruchdehnung bei 25 %, wobei 26 % besonders bevorzugt sind. Die Bestimmung der Bruchdehnung erfolgt anhand der in Beispiel 1 beschriebenen Methode gemäß DIN EN ISO 527-1 und DIN EN ISO 527-3. Die angegebenen Bruchdehnungswerte sind die Mittelwerte von jeweils 4 Messungen längs und quer zur Ziehrichtung der Membran.

Gemäß einer bevorzugten Ausführungsform der vorliegenden Erfindung ist die Cellulosehydrat-Membran eine Mikro- oder Ultrafiltrationsmembran. Besonders bevorzugt ist die erfindungsgemäße Membran eine Mikrofiltrationsmembran mit einer "mean flow pore size" im Bereich von 0,1 bis 10 $\mu$m. Insbesondere bevorzugt ist eine sterilfiltrierende Membran mit einer "mean flow pore size" von 0,1 bis 0,6 $\mu$m. Die Bestimmung der "mean flow pore size" erfolgt anhand der in Beispiel 1 beschriebenen Methode.

Gemäß einer weiteren bevorzugten Ausführungsform der vorliegenden Erfindung ist die Cellulosehydrat-Membran plissiert und liegt als unverstärkte plissierte Membran vor.

Des Weiteren stellt die vorliegende Erfindung ein Verfahren zur Herstellung der erfindungsgemäßen vernetzten unverstärkten Cellulosehydrat-Membran bereit. Die vorstehenden Ausführungen bezüglich der erfindungsgemäßen vernetzten Cellulosehydrat-Membran treffen daher auch auf das erfindungsgemäße Herstellungsverfahren zu.

Das erfindungsgemäße Verfahren zur Herstellung einer vernetzten unverstärkten Cellulosehydrat-Membran umfasst die folgenden Schritte:

- Bereitstellen einer Cellulosehydrat-Membran; und anschließendes
- Vernetzen der Cellulosehydrat-Membran durch Imprägnieren mit einer Vernetzerlösung und anschließende Temperaturerhöhung,
  wobei die Vernetzung in wässrig alkalischer Lösung mit mindestens zwei verschiedenen Vernetzungsmitteln durchgeführt wird, ausgewählt aus Diepoxidverbindungen, die unterschiedliche Abstandshaltergruppen zwischen den endständigen Epoxidgruppen aufweisen, und wobei die Vernetzung bei einer Temperatur von 75 °C bis 150 °C für 0,1 bis 60 Minuten durchgeführt wird;
- anschließende Entfernung überschüssiger Edukte und löslicher Reaktionsprodukte durch Spülen in wässrigen Lösungen und anschließende Imprägnierung mit einer Weichmacherlösung, z.B. Glycerinlösung; sowie
- anschließende Trocknung der Membran, wobei die Trocknung bei einer Temperatur von 20 °C bis 150 °C durchgeführt wird.

Besonders bevorzugt sind die Reaktionsschritte eines kontinuierlichen Herstellungsprozesses.

Als Ausgangsmaterial für die erfindungsgemäße Cellulosehydrat-Membran kann eine Cellulosehydrat-Membran dienen, die beispielsweise aus einer Celluloseester-Membran gewonnen werden kann, wobei die Celluloseester-Membran in einer Verseifungsreaktion mit mindestens einer wässrigen Lösung unter Bedingungen in Kontakt gebracht wird, die in situ zur Hydrolyse (Verseifung) der Estergruppen zu Hydroxygruppen führen, wodurch eine Cellulosehydrat-Membran entsteht.

Somit wird gemäß einer bevorzugten Ausführungsform des erfindungsgemäßen Verfahrens die Cellulosehydrat-Membran zuvor durch Verseifen einer Celluloseester-Membran in einem wässrigen Medium erhalten.

Wie vorstehend beschrieben, wird die Cellulosehydrat-Membran unter Verwendung von mindestens zwei verschiedenen Diepoxidverbindungen als Vernetzungsmittel separat heißvernetzt. Die Durchführung des Verseifungsschrittes und des Vernetzungsschrittes erfolgt folglich nicht simultan, sondern in separaten Verfahrensschritten.

Bei einer bevorzugten Ausführungsform kann die Ausgangsmembran, d. h. die Cellulosehydrat-Membran, durch Verseifung einer Celluloseester-Membran mit einem Porendurchmesser von 0,1 bis 10 μm, vorzugsweise 0,1 bis 5 μm und mehr bevorzugt von 0,1 bis 0,6 μm, und einer Dicke von 50 bis 150 μm gewonnen werden, wobei die Celluloseester-Membran durch ein übliches, auf dem Fachgebiet bekanntes Herstellungsverfahren hergestellt ist. Zur Bestimmung des Porendurchmessers wird ein "Capillary Flow Porometry Test" durchgeführt. Weitere Details sind der Bedienungsanleitung "Porolux 500" der Firma Porometer zu entnehmen, bzw. in Beispiel 1 beschrieben.

Celluloseester-Membranen können aus Cellulosemonoacetat, Cellulosediacetat, Cellulosetriacetat, Cellulosepropionat, Cellulosebutyrat und Celluloseacetobutyrat oder anderen geeigneten Celluloseestern oder Cellulosenitrat, Methylcellulose oder Ethylcellulose, sowie Gemischen davon, aufgebaut sein, wobei Celluloseacetate, insbesondere Cellulosediacetat, bevorzugt sind bzw. ist. Dem Fachmann ist bekannt, dass die Celluloseester-Membran zum Teil auch Hydroxygruppen neben den Estergruppen enthalten kann.

Vor dem Verseifen kann die Celluloseester-Membran gegebenenfalls in einem geeigneten Medium vorbehandelt werden. Die Temperatur in dem Vorbehandlungsschritt liegt vorzugsweise in einem Bereich von 10 °C bis 100 °C, wobei eine Temperatur in einem Bereich von etwa 15 °C bis etwa 40 °C besonders bevorzugt ist. Als Vorbehandlungsmedium kann ein Gas, wie beispielsweise Luft, ein organisches Lösungsmittel, wie beispielsweise ein Alkohol, oder ein wässriges Medium verwendet werden, wobei ein wässriges Medium bevorzugt ist.

Die Dauer der Vorbehandlung hat keinen wesentlichen Einfluss auf den Vorbehandlungseffekt, sofern eine Mindesteinwirkdauer angewendet wird, die eine Temperaturangleichung der Celluloseester-Membran in dem Vorbehandlungsmedium gewährleistet. Die Beendigung der Vorbehandlung kann durch Ausspülen des Vorbehandlungsmediums aus der Membran mit entmineralisiertem Wasser erfolgen.

Die gegebenenfalls vorbehandelte Celluloseester-Membran wird mit einem geeigneten Verseifungsmedium verseift, wodurch sich die Cellulosehydrat-Membran ausbildet. Je nach den Benetzungseigenschaften kann die Celluloseester-Membran trocken oder nass im Verseifungsschritt eingesetzt werden.

Das Verseifen der Celluloseester-Membran erfolgt in einem Verseifungsmedium. Besonders bevorzugt wird ein wässriges Verseifungsmedium mit einem pH-Wert von >7 verwendet. Das Verseifungsmedium weist vorzugsweise eine alkalische Verbindung, bevorzugt ein Alkalimetallhydroxid auf. Besonders bevorzugt ist es, eine wässrige Lösung aus Natrium-, Kalium- oder Lithiumhydroxid zu verwenden. Gemäß einer besonders bevorzugten Ausführungsform der vorliegenden Erfindung wird eine wässrige Natriumhydroxid- und/oder Kaliumhydroxid-haltige Lösung verwendet, **wobei** die Konzentration des Natriumhydroxids und/oder Kaliumhydroxids in dem Verseifungsmedium in einem Bereich von 0,1 bis 5 mol/kg besonders bevorzugt in einem Bereich von 0,1 bis 0,6 mol/kg liegt.

Vorzugsweise enthält das basische Verseifungsmedium (wässrige NaOH und/oder KOH) zusätzlich ein Salz, wie z.B. Kaliumcarbonat in einer Konzentration von 0,1 bis 5 mol/kg. Die Temperatur des verwendeten Mediums in dem Verseifungsschritt kann von etwa 10 °C bis zum Siedepunkt des Verseifungsmediums betragen, wobei eine Temperatur in einem Bereich von 15 °C bis etwa 50 °C bevorzugt ist.

Die Verseifungsdauer richtet sich nach der Zusammensetzung des Verseifungsmediums und der Verseifungstemperatur. Üblicherweise beträgt die Verseifungsdauer 0,1 bis 60 Minuten, wobei eine Verseifungsdauer von 5 bis 30 Minuten bevorzugt ist.

Anschließend wird, wie bereits vorstehend beschrieben, bei dieser bevorzugten Ausführungsform des erfindungsgemäßen Verfahrens die erhaltene verseifte Celluloseacetat-Membran mit mindestens zwei verschiedenen Vernetzungsmitteln vernetzt. Bezüglich der genauen Beschreibung dieses erfindungsgemäßen Vernetzungsschritts wird auf die entsprechenden vorstehenden Ausführungen verwiesen.

Wie vorstehend beschrieben, kann die erhaltene vernetzte Cellulosehydrat-Membran mit einer glycerinhaltigen Lösung von 0,5 bis 30 Gew.-% Glycerin zusätzlich behandelt werden. Gemäß der vorliegenden Erfindung ist es vorteilhafterweise möglich, eine unverstärkte plissierte Cellulosehydrat-Membran herzustellen, die einen geringen Weichmachergehalt aufweist. Aufgrund der verbesserten mechanischen Stabilität der erfindungsgemäßen Membran beträgt der Weichmachergehalt, beispielsweise in Form von Glycerin, insbesondere weniger als 10 Gew.-%, mehr bevorzugt weniger als 8 Gew.-%. Gemäß einer bevorzugten Ausführungsform umfasst das erfindungsgemäße Herstellungsverfahren ferner den Schritt des Plissierens der vernetzten Cellulosehydrat-Membran. Ausgehend von den erfindungsgemäßen Eigenschaften der Membran ist es darüber hinaus möglich, dass die Plissierung ohne Verwendung von Dampf erfolgt.

Die erfindungsgemäßen Membranen aus vernetztem Cellulosehydrat können als Flachmembran hergestellt werden und in entsprechenden Modulen eingebaut werden. Wie vorstehend beschrieben, eignen sich die erfindungsgemäßen Cellulosehydrat-Membranen insbesondere zur Plissierung, selbst wenn diese unverstärkt sind.

Der Anwendungsbereich der erfindungsgemäßen Membranen erstreckt sich auf jedwede Filtration wässriger Medien. Das ist beispielsweise für die Filtration wässriger Medien biologischen und biotechnologischen Ursprungs der Fall.

Die vorliegende Erfindung wird anhand der folgenden Beispiele näher erläutert, wobei die in den Figuren 1a bis 3b dargestellten Diagramme die Eigenschaften der erhaltenen Membranen zusammenfassen.

Figuren 1a und 1b zeigen den Vernetzungsgrad DX der vernetzten Membranen in Abhängigkeit von der Reaktionszeit, wobei in Figur 1a die Beispiele 1 bis 3 (C90-20 bis E90-20), die Vergleichsbeispiele 1 und 2 (A90-20 und B90-20) sowie die Vergleichsbeispiele des Kaltverfahrens A-E dargestellt sind und in Figur 1b die Beispiele 1 bis 4 (C90-20 bis E90-20 und C80-30) und die Vergleichsbeispiele 8, 9-1 und 9-2 dargestellt sind.

Figuren 2a und 2b zeigen die Dimensionsänderung der Membranfläche (Quell- und Schrumpfverhalten) der vernetzten Membranen in Abhängigkeit vom Vernetzungsgrad DX, wobei in Figur 2a die Beispiele 1 bis 3 (C90-20 bis E90-20), die Vergleichsbeispiele 1 und 2 (A90-20 und B90-20) sowie die Vergleichsbeispiele des Kaltverfahrens A-E dargestellt sind und in Figur 2b die Beispiele 1 bis 4 (C90-20 bis E90-20 und C80-30) und die Vergleichsbeispiele 8, 9-1 und 9-2 dargestellt sind. Darüber hinaus ist in den Figuren 2a und 2b die Dimensionsänderung der unvernetzten Cellulose(hydrat)membran dargestellt.

Figuren 3a und 3b zeigen die Bruchdehnung in Abhängigkeit vom Vernetzungsgrad DX, wobei in Figur 3a die Beispiele 1 bis 3 (C90-20 bis E90-20), die Vergleichsbeispiele 1 und 2 (A90-20 und B90-20) sowie die Vergleichsbeispiele des Kaltverfahrens A-E dargestellt sind und in Figur 3b die Beispiele 1 bis 4 (C90-20 bis E90-20 und C80-30) und die Vergleichsbeispiele 8, 9-1 und 9-2 dargestellt sind. Zudem ist in den Figuren 3a und 3b die Bruchdehnung der unvernetzten Cellulose(hydrat)membran dargestellt.

Verwendete Reagenzien:

Wasser aus Umkehrosmose, LF <2 μS/cm, Hausleitung
Natronlauge 1 N in Wasser, [1310-73-2], Sigma Aldrich
BuDGE (1,4-Butandioldiglycidylether), [2425-79-8], techn. Ems Chemie,
PEG-500-DGE (Polyethylene glycol) diglycidyl ether), [72207-80-8], Sigma-Aldrich Glycerin 85%ig, [56-81-5], Sigma-Aldrich
Kalilauge 50%ig in Wasser, [1310-58-3], Carl-Roth
Kaliumcarbonat 99%ig p.a., [584-08-7], Carl-Roth

**Ausgangsmembran Celluloseacetat, Sartorius-Stedim-Biotech R&D**

- "Bubble point" visuell mit Wasser (nach DIN 58355) Anströmseite Bandseite 3,6 - 3,8 bar,
- Durchflussrate für Wasser nach DIN 58355: 20 - 25 ml/(min pro $cm^2$ Membran und bar)
- Dicke 185 - 195 μm (Methode nach DIN 53105)

**Ausgangsmembran Cellulosehydrat, Sartorius-Stedim-Biotech R&D**

- "Bubble point" visuell mit Wasser (nach DIN 58355) Anströmseite Bandseite 4,4 - 4,6 bar,
- Durchflussrate für Wasser nach DIN 58355: 25 - 30 ml/(min pro $cm^2$ Membran und bar)
- Dicke 95 -105 μm (Methode nach DIN 53105)

**Beispiel 1:** (Kurzname: C90-20)

Ein Bogen der Bruttodimension inklusive Beschwerungsstreifen von 40 x 22 cm einer unverstärkten Cellulosehydrat-Membran wurde aus einer Membranrolle geschnitten. Die Nettodimension von 29,7 x 22 cm wurde markiert und dient allen späteren Messungen. Die Beschwerungsstreifen wurden nach der Reaktion entfernt. Die längere Seite des Bogens ist stets die Verarbeitungsrichtung der Ausgangsmembranrolle. Nach Bestimmung des Gewichts wurde der Bogen in einer Imprägnierlösung der Zusammensetzung 0,1 mol/kg BuDGE, 0,1 mol/kg PEG-500-DGE und 0,125 mol/kg NaOH für 60 s in einer Kunststoffwanne imprägniert. Der imprägnierte Bogen wurde sofort auf einer mit Teflonfolie beklebten beheizbaren Edelstahlplatte bei 90 °C für 20 min erhitzt. Dabei wurden die Randbereiche an zwei Seiten mit Gewichten fixiert, wobei diese Beschwerungsstreifen nicht in die Berechnung der Dimensionsänderung miteinbezogen wurden. Um klimabedingte Verdunstungseffekte zu minimieren, wurde oberhalb der Platte eine halbgeschlossene Haube platziert. Anschließend wurde der Bogen mit Wasser neutralgewaschen und die Dimensionen (Länge und Breite) der Membran gemessen. Nach Trocknung des Bogens bei Raumtemperatur bis zur Gewichtskonstanz wurden erneut Länge und Breite gemessen sowie das Gewicht bestimmt.

Der Gleichgewichtswassergehalt von Ausgangsmembran und der erfindungsgemäßen Membran lag bei 10 %. Diese Gehalte wurden von der Gesamtmasse abgezogen. Zur Berechnung des Vernetzungsgrades wurde die Massenzunahme verwendet.

Für die Zugmessungen wurde die Membran in einem weiteren Schritt in einer Lösung aus 5 Gew.-% Glycerin für 3 min imprägniert und bei Raumtemperatur getrocknet. Es wurden Streifen von 1,5 x 10 cm längs und quer zur Herstellungsrichtung der Ausgangsmembran geschnitten. Da sich der Feuchtegehalt auf die Eigenschaften im Zugversuch auswirkt, wurden alle Proben zusammen in einem PE-Beutel für mindestens zwei Wochen gelagert.

Die Zugmessung erfolgte in Anlehnung an DIN EN ISO 527-1 und DIN EN ISO 527-3 bei einer relativen Luftfeuchtigkeit von 40-50 % und bei einer Temperatur von 23-25 °C, Kraftaufnehmer 200 N, Einspannlänge bei Startposition 50 mm, einer Probenbreite von 15 mm und bei einer Prüfgeschwindigkeit von 5 mm/min.

Die Bestimmung der "mean flow pore size" erfolgte mit "capillary flow porometry", mittels des Gerätes "Porolux 500" der Firma Porometer, mit der Benetzungsflüssigkeit Porofil der Oberflächenspannung 16 Dyne/cm, einem Kontaktwinkel von 0° und dem "shape factor" von 0,715 bei einer Rate von 2000 s/bar und 400 Datenpunkten im Messintervall von 0,6 bar. Die Probengröße betrug 25 mm im Durchmesser, als Probenhalter SH 25. Erst wurde eine Nasskurve und sofort darauffolgend eine Trockenkurve aufgenommen. Das Kriterium für den bubble point war die Einstellung "first flow". Die genaue Verfahrensweise und die von der Gerätesoftware durchgeführten Berechnungen sind der Bedienungsanleitung des Porolux 500 zu entnehmen.

Die Bestimmung des Sterilfiltrationsvermögens erfolgte mittels "Bacterial Challenge Test" nach DIN 58 355 bei einer Bakterienkonzentration von $>10^7/cm^2$ Filterfläche mit dem Testkeim Brevundimonas diminuta. Der Bakterienrückhalt der plissierten und unplissierten Membran lag stets bei 100 %. Das Sterilfiltrationsvermögen wurde somit nachgewiesen.

**Beispiel 2**: (Kurzname: D90-20)

Herstellung wie in Beispiel 1, wobei eine Imprägnierlösung mit folgender Zusammensetzung verwendet wurde: 0,15 mol/kg BuDGE, 0,05 mol/kg PEG-500-DGE und 0,125 mol/kg NaOH.

**Beispiel 3**: (Kurzname: E90-20)

Ausführung wie in Beispiel 1, wobei eine Imprägnierlösung mit folgender Zusammensetzung verwendet wurde: 0,05 mol/kg BuDGE, 0,15 mol/kg PEG-500-DGE und 0,125 mol/kg NaOH.

**Vergleichsbeispiel** 1: (Kurzname: A90-20)

Ausführung wie in Beispiel 1, wobei eine Imprägnierlösung mit folgender Zusammensetzung verwendet wurde: 0,2 mol/kg BuDGE und 0,125 mol/kg NaOH.

**Vergleichsbeispiel** 2: (Kurzname: B90-20)

Ausführung wie in Beispiel 1, wobei eine Imprägnierlösung mit folgender Zusammensetzung verwendet wurde: 0,2 mol/kg PEG-500-DGE und 0,125 mol/kg NaOH.

**Vergleichsbeispiel 3-24:** (Kurzname: C24)

Ein Bogen der Dimension 30 x 21 cm der unverstärkten Cellulosehydrat-Membran wurde aus einer Membranrolle geschnitten. Die längere Seite des Bogens ist stets die Verarbeitungsrichtung der Ausgangsmembranrolle. Nach Bestimmung des Gewichts wurde der Bogen in einer Imprägnierlösung der Zusammensetzung 0,1 mol/kg BuDGE, 0,1 mol/kg PEG-500-DGE und 0,125 mol/kg NaOH für 60 s in einer Kunststoffwanne imprägniert. Der imprägnierte Bogen wurde sofort in eine geeignete Folie gepackt und 24 h bei Raumtemperatur gelagert, dies ist die Reaktionszeit. Anschließend wurde der Bogen mit Wasser neutralgewaschen und die Dimensionen (Länge und Breite) der Membran gemessen. Nach Trocknung des Bogens bei Raumtemperatur bis zur Gewichtskonstanz wurden erneut Länge und Breite gemessen sowie das Gewicht bestimmt.

**Vergleichsbeispiel 3-72:** (Kurzname: C72)

Ausführung wie in Vergleichsbeispiel 3-24, wobei die Reaktionszeit bei Raumtemperatur jedoch 72 h betrug.

**Vergleichsbeispiel 3-120:** (Kurzname: C120)

Ausführung wie in Vergleichsbeispiel 3-24, wobei die Reaktionszeit bei Raumtemperatur jedoch 120 h betrug.

**Vergleichsbeispiel 4-24:** (Kurzname: D24)

Ausführung wie in Vergleichsbeispiel 3-24, wobei eine Imprägnierlösung mit folgender Zusammensetzung verwendet wurde: 0,15 mol/kg BuDGE, 0,05 mol/kg PEG-500-DGE und 0,125 mol/kg NaOH.

**Vergleichsbeispiel 4-72:** (Kurzname: D72)

Ausführung wie in Vergleichsbeispiel 4-24, wobei die Reaktionszeit bei Raumtemperatur jedoch 72 h betrug.

**Vergleichsbeispiel 4-120:** (Kurzname: D120)

Ausführung wie in Vergleichsbeispiel 4-24, wobei die Reaktionszeit bei Raumtemperatur jedoch 120 h betrug.

**Vergleichsbeispiel 5-24:** (Kurzname: E24)

Ausführung wie in Vergleichsbeispiel 3-24, wobei eine Imprägnierlösung mit folgender Zusammensetzung verwendet wurde: 0,05 mol/kg BuDGE, 0,15 mol/kg PEG-500-DGE und 0,125 mol/kg NaOH.

**Vergleichsbeispiel 5-72:** (Kurzname: E72)

Ausführung wie in Vergleichsbeispiel 5-24, wobei die Reaktionszeit bei Raumtemperatur jedoch 72 h betrug.

**Vergleichsbeispiel 5-120:** (Kurzname: E120)

Ausführung wie in Vergleichsbeispiel 5-24, wobei die Reaktionszeit bei Raumtemperatur jedoch 120 h betrug.

**Vergleichsbeispiel 6-24:** (Kurzname: A24)

Ausführung wie in Vergleichsbeispiel 3-24, wobei eine Imprägnierlösung mit folgender Zusammensetzung verwendet wurde: 0,2 mol/kg BuDGE und 0,125 mol/kg NaOH.

**Vergleichsbeispiel 6-72:** (Kurzname: A72)

Ausführung wie in Vergleichsbeispiel 6-24, wobei die Reaktionszeit bei Raumtemperatur jedoch 72 h betrug.

**Vergleichsbeispiel 6-120:** (Kurzname: A120)

Ausführung wie in Vergleichsbeispiel 6-24, wobei die Reaktionszeit bei Raumtemperatur jedoch 120 h betrug.

**Vergleichsbeispiel 7-24:** (Kurzname: B24)

Ausführung wie in Vergleichsbeispiel 3-24, wobei eine Imprägnierlösung mit folgender Zusammensetzung verwendet wurde: 0,2 mol/kg PEG-500-DGE und 0,125 mol/kg NaOH.

**Vergleichsbeispiel 7-72:** (Kurzname: B72)

Ausführung wie in Vergleichsbeispiel 7-24, wobei die Reaktionszeit bei Raumtemperatur jedoch 72 h betrug.

**Vergleichsbeispiel 7-120:** (Kurzname: B120)

Ausführung wie in Vergleichsbeispiel 7-24, wobei die Reaktionszeit bei Raumtemperatur jedoch 120 h betrug.

**Vergleichsbeispiel** 8: (Kurzname: C55-30)

Ausführung wie in Beispiel 1, wobei die Reaktionszeit bei 55 °C 30 min betrug.

**Beispiel 4:** (Kurzname: C80-30)

Ausführung wie in Beispiel 1, wobei die Reaktionszeit bei 80 °C 30 min betrug.

**Vergleichsbeispiel** 9-1: (Kurzname: C GE75-7)

(Ausführung wie in WO 2008/095709 A1 beschrieben)

Zwei Bögen der Dimension 11 x 17 cm der unverstärkten Celluloseacetat-Membran wurden aus einer Membranrolle geschnitten und das Gewicht bestimmt. Eine Imprägnierlösung der Zusammensetzung 718,54 mL Wasser und 71,85 g Natriumsulfat wurde auf 75 °C erwärmt und im Anschluss wurden jeweils 0,093 mol der Epoxidverbindungen BuDGE und PEG-500-DGE zugegeben und die Lösung für 5 min kräftig gerührt. Die Membranbögen wurden in einem Netz aus Polyolefin fixiert und in das Becherglas mit der Imprägnierlösung gestellt. Es wurden neun Portionen von 1,257 mL 50%ige NaOH in einem Abstand von jeweils 20 min zudosiert und die Lösung 7 h bei der Reaktionstemperatur von 75 °C gerührt. Zur Beendigung der Reaktion wurde die Membran in Wasser bis zur pH-Neutralität gespült und bei Raumtemperatur getrocknet.

**Vergleichsbeispiel 9-2:** (Kurzname: C GE85-7)

Ausführung wie in Vergleichsbeispiel 9-1, wobei die Reaktionstemperatur 85 °C betrug.
Die vorstehend beschriebenen Herstellungsparameter der Beispiele und Vergleichsbeispiele sind in Tabelle 1 zusammengefasst.

Tabelle 1:

| | Kurzname | Konz. BuDGE [mol/kg] | Konz. PEG-500-DGE [mol/kg] | Reaktionstemp. [°C] | Reaktionszeit [h] | Verfahren |
|---|---|---|---|---|---|---|
| Beispiel 1 | C90-20 | 0,10 | 0,10 | 90 | 0,33 | Heiß |
| Beispiel 2 | D90-20 | 0,15 | 0,05 | 90 | 0,33 | Heiß |
| Beispiel 3 | E90-20 | 0,05 | 0,15 | 90 | 0,33 | Heiß |
| Beispiel 4 | C80-30 | 0,10 | 0,10 | 80 | 0,5 | Heiß |
| Verpleichsbsp. 1 | A90-20 | 0,20 | - | 90 | 0,33 | Heiß |
| Verpleichsbsp. 2 | B90-20 | - | 0,2 | 90 | 0,33 | Heiß |

(fortgesetzt)

| | Kurzname | Konz. BuDGE [mol/kg] | Konz. PEG-500-DGE [mol/kg] | Reaktionstemp. [°C] | Reaktionszeit [h] | Verfahren |
|---|---|---|---|---|---|---|
| Vergleichsbsp.3-24 | C24 | 0,10 | 0,10 | RT (20-25) | 24 | Kalt |
| Vergleichsbsp.3-72 | C72 | 0,10 | 0,10 | RT (20-25) | 72 | Kalt |
| Vergleichsbsp. 3-120 | C120 | 0,10 | 0,10 | RT (20-25) | 120 | Kalt |
| Verpleichsbsp.4-24 | D24 | 0,15 | 0,05 | RT (20-25) | 24 | Kalt |
| Verpleichsbsp.4-72 | D72 | 0,15 | 0,05 | RT (20-25) | 72 | Kalt |
| Vergleichsbsp. 4-120 | D120 | 0,15 | 0,05 | RT (20-25 | 120 | Kalt |
| Vergleichsbsp.5-24 | E24 | 0,05 | 0,15 | RT (20-25) | 24 | Kalt |
| Vergleichsbsp.5-72 | E72 | 0,05 | 0,15 | RT (20-25) | 72 | Kalt |
| Vergleichsbsp. 5-120 | E120 | 0,05 | 0,15 | RT (20-25) | 120 | Kalt |
| Vergleichsbsp.6-24 | A24 | 0,20 | - | RT (20-25) | 24 | Kalt |
| Vergleichsbsp.6-72 | A72 | 0,20 | - | RT (20-25) | 72 | Kalt |
| Vergleichsbsp. 6-120 | A120 | 0,20 | - | RT (20-25) | 120 | Kalt |
| Vergleichsbsp.7-24 | B24 | - | 0,20 | RT (20-25) | 24 | Kalt |
| Vergleichsbsp.7-72 | B72 | - | 0,20 | RT (20-25) | 72 | Kalt |
| Vergleichsbsp. 7-120 | B120 | - | 0,20 | RT (20-25) | 120 | Kalt |
| Vergleichsbsp.8 | C55-30 | 0,10 | 0,10 | 55 | 0,5 | Heiß |
| Vergleichsbsp.9-1 | C GE75-7 | 0,10 | 0,10 | 75 | 7 | Eintopf |
| Vergleichsbsp.9-2 | C GE85-7 | 0,10 | 0,10 | 85 | 7 | Eintopf |

**Diskussion der Ergebnisse**

Wie in Figur 1 deutlich erkennbar ist, ist bei der Vernetzung im Kaltvernetzungsverfahren (Nassverfahren) bei Raumtemperatur der maximale Vernetzungsgrad mit BuDGE zu erreichen. Die Vernetzungsgrade mit PEG-500-DGE sind deutlich niedriger. Die erzielten Vernetzungsgrade der Gemische werden durch den Anteil des BuDGE dominiert, da der Vemetzer PEG-500-DGE im Nassverfahren kaum reaktiv ist.

Im Gegensatz dazu führt das erfindungsgemäße Heißvernetzungsverfahren mit nur jeweils einem der beiden Vernetzer BuDGE oder PEG-500-DGE zum annähernd gleichen Vernetzungsgrad und somit vergleichbarer Reaktivität der Vernetzer. Überraschenderweise wird dieser von den Gemischen mit beiden Vernetzern BuDGE und PEG-500-DGE noch deutlich übertroffen. Entsprechend des höheren Vernetzungsgrades weisen die Membranen ein geringes Quell- und Schrumpfverhalten auf und somit eine insgesamt geringere Dimensionsänderung der Fläche, wie dies in den Figuren 2a und 2b zusammengefasst ist.

Die Elastizität, nachgewiesen durch die größere Bruchdehnung im Zugversuch der heißvernetzten Membranen unter Verwendung der Gemische der beiden Vernetzer, ist überaschenderweise trotz höherem Vernetzungsgrad gleich oder höher als die der im Nassverfahren oder im Heißverfahren mit nur einem Vernetzer hergestellten Membranen, wie dies in den Figuren 3a und 3b zu sehen ist.

Die Verwendung eines Vernetzergemisches in Kombination mit der Heißvernetzung erweist sich somit als besonders vorteilhaft, um plissierfähige Membranen herzustellen. Die Herstellung der vernetzten Cellulosehydrat-Membranen ist besonders vorteilhaft nach dem erfindungsgemäßen Verfahren durchzuführen. Die Herstellung von vernetzten Cellulosehydrat-Membranen in einem Eintopfverfahren, siehe Vergleichsbeispiele 9-1 und 9-2, sowie bei geringerer

Reaktionstemperatur von 55 °C führt nicht zu dem gewünschten Vernetzungsgrad (wie aus Figur 1b hervorgeht) sowie nicht zur gewünschten Dimensionsstabilität unter Erhalt der Plissierfähigkeit (wie aus Figuren 2b und 3b) hervorgeht.

## Patentansprüche

1. Vernetzte unverstärkte Cellulosehydrat-Membran, welche mit mindestens zwei verschiedenen Vernetzungsmitteln vernetzt ist, ausgewählt aus Diepoxidverbindungen, die unterschiedliche Abstandshaltergruppen zwischen den endständigen Epoxidgruppen aufweisen, wobei die Cellulosehydrat-Membran einen Vernetzungsgrad von 0,04 bis 0,10, eine Dimensionsänderung der Membranfläche in wässrigen Lösungen von 25 % oder weniger und eine Bruchdehnung gemäß DIN EN ISO 527-1 und DIN EN ISO 527-3 bei einer relativen Luftfeuchtigkeit von 40 bis 50 % und bei einer Temperatur von 23 bis 25 °C von mindestens 20 % aufweist, wobei als Vernetzungsmittel mindestens ein Alkandioldiglycidylether und mindestens ein Glycidylether der folgenden Formel verwendet werden:

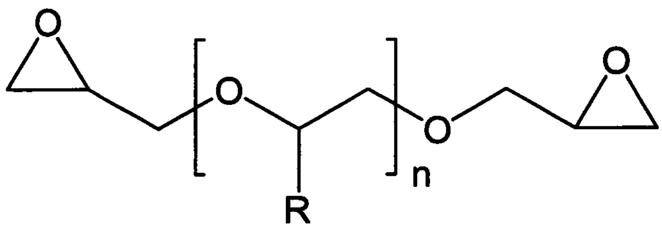

wobei n 3 bis 50 ist und R Wasserstoff oder eine Methylgruppe darstellt,
und wobei der Vernetzungsgrad und die Dimensionsänderung der Membranfläche unter Verwendung der in der Beschreibung beschriebenen Verfahren bestimmt werden.

2. Vernetzte unverstärkte Cellulosehydrat-Membran nach Anspruch 1, wobei die Cellulosehydrat-Membran eine Mikro- oder Ultrafiltrationsmembran ist.

3. Vernetzte unverstärkte Cellulosehydrat-Membran nach Anspruch 1 oder 2, welche sterilfiltrierend ist.

4. Vernetzte unverstärkte Cellulosehydrat-Membran nach einem der Ansprüche 1 bis 3, welche plissiert ist.

5. Verfahren zur Herstellung einer vernetzten unverstärkten Cellulosehydrat-Membran nach einem der Ansprüche 1 bis 4, umfassend die Schritte:

   - Bereitstellen einer Cellulosehydrat-Membran; und anschließendes
   - Vernetzen der Cellulosehydrat-Membran durch Imprägnieren mit einer Vernetzerlösung und anschließende Temperaturerhöhung,
   wobei die Vernetzung in wässrig alkalischer Lösung mit mindestens zwei verschiedenen Vernetzungsmitteln durchgeführt wird, ausgewählt aus Diepoxidverbindungen, die unterschiedliche Abstandshaltergruppen zwischen den endständigen Epoxidgruppen aufweisen, und wobei die Vernetzung bei einer Temperatur von 75 °C bis 150 °C für 0,1 bis 60 Minuten durchgeführt wird;
   - anschließende Entfernung überschüssiger Edukte und löslicher Reaktionsprodukte durch Spülen in wässrigen Lösungen und anschließende Imprägnierung mit einer Weichmacherlösung; sowie
   - anschließende Trocknung der Membran, wobei die Trocknung bei einer Temperatur von 20 °C bis 150 °C durchgeführt wird,
   wobei als Vernetzungsmittel mindestens ein Alkandioldiglycidylether und mindestens ein Glycidylether der folgenden Formel verwendet werden:

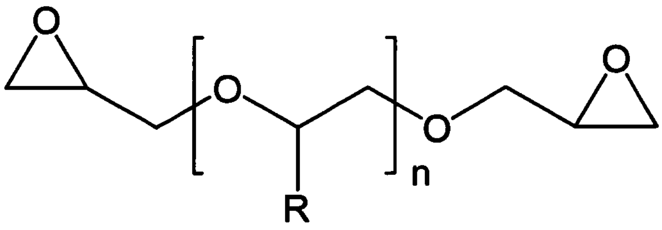

wobei n 3 bis 50 ist und R Wasserstoff oder eine Methylgruppe darstellt.

6. Verfahren nach Anspruch 5, wobei die Cellulosehydrat-Membran durch Verseifen einer Celluloseester-Membran in einem wässrigen Medium erhalten wird.

7. Verfahren nach Anspruch 6, wobei die Verseifung in einer Natriumhydroxid-, Kaliumhydroxid- und/oder Lithiumhydroxid-haltigen Lösung stattfindet.

8. Verfahren nach einem der Ansprüche 5 bis 7, wobei die Vernetzung bei einer Temperatur von 80 °C bis 140 °C für 0,5 bis 40 Minuten durchgeführt wird.

9. Verfahren nach einem der Ansprüche 5 bis 8, ferner umfassend den Schritt des Plissierens der vernetzten Cellulosehydrat-Membran.

10. Verwendung der vernetzten unverstärkten Cellulosehydrat-Membran nach einem der Ansprüche 1 bis 4 oder einer gemäß dem Verfahren nach einem der Ansprüche 5 bis 9 hergestellten vernetzten unverstärkten Cellulosehydrat-Membran zur Filtration wässriger Medien.

## Claims

1. A crosslinked unreinforced cellulose hydrate membrane crosslinked using at least two different crosslinking agents selected from diepoxide compounds having different spacer groups between the terminal epoxy groups, the cellulose hydrate membrane exhibiting a degree of crosslinking of 0.04 to 0.10, a dimensional change in membrane area in aqueous solutions of 25% or less and an elongation at break according to DIN EN ISO 527-1 and DIN EN ISO 527-3 at a relative air humidity of 40% to 50% and at a temperature of 23°C to 25°C of at least 20%, wherein at least one alkanediol diglycidyl ether and at least one glycidyl ether of the following formula are used as crosslinking agents:

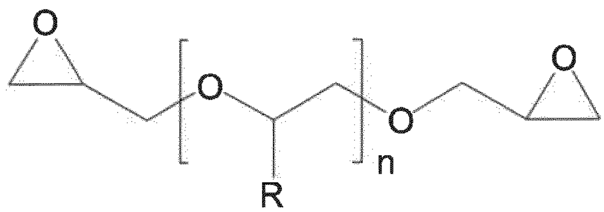

where n is 3 to 50, and R is hydrogen or a methyl group,
and wherein the degree of crosslinking and the dimensional change in membrane area are determined using the methods described in the description.

2. The crosslinked unreinforced cellulose hydrate membrane according to claim 1, wherein the cellulose hydrate membrane is a microfiltration membrane or ultrafiltration membrane.

3. The crosslinked unreinforced cellulose hydrate membrane according to claim 1 or 2, which allows sterile filtration.

4. The crosslinked unreinforced cellulose hydrate membrane according to any one of claims 1 to 3, which is pleated.

5. A method for producing a crosslinked unreinforced cellulose hydrate membrane according to any one of claims 1 to 4, comprising the steps of:

- provision of a cellulose hydrate membrane; and subsequent
- crosslinking of the cellulose hydrate membrane by impregnation with a crosslinker solution and subsequent temperature increase,

the crosslinking being carried out in an aqueously alkaline solution containing at least two different crosslinking agents selected from diepoxide compounds having different spacer groups between the terminal epoxy groups, and the crosslinking being carried out at a temperature of 75°C to 150°C for 0.1 to 60 minutes;
- subsequent removal of excess reactants and soluble reaction products by rinsing in aqueous solutions and subsequent impregnation with a plasticizer solution; and
- subsequent drying of the membrane, the drying being carried out at a temperature of 20°C to 150°C,

wherein at least one alkanediol diglycidyl ether and at least one glycidyl ether of the following formula are used as crosslinking agents:

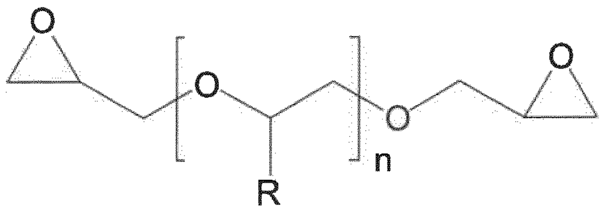

where n is 3 to 50, and R is hydrogen or a methyl group.

6. The method according to claim 5, wherein the cellulose hydrate membrane is obtained by saponification of a cellulose ester membrane in an aqueous medium.

7. The method according to claim 6, wherein the saponification takes place in a sodium hydroxide-, potassium hydroxide- and/or lithium hydroxide-containing solution.

8. The method according to any one of claims 5 to 7, wherein the crosslinking is carried out at a temperature of 80°C to 140°C for 0.5 to 40 minutes.

9. The method according to any one of claims 5 to 8, further comprising the step of pleating of the crosslinked cellulose hydrate membrane.

10. The use of the crosslinked unreinforced cellulose hydrate membrane according to any one of claims 1 to 4 or of a crosslinked unreinforced cellulose hydrate membrane produced in accordance with the method according to any one of claims 5 to 9 for the filtration of aqueous media.

**Revendications**

1. Membrane en hydrate de cellulose réticulée non renforcée, laquelle est réticulée à l'aide d'au moins deux agents de réticulation différents, sélectionnés parmi les composés diépoxyde présentant différents groupes d'écartement entre les groupements époxyde de fin de chaîne, la membrane en hydrate de cellulose présentant un degré de réticulation allant de 0,04 à 0,10, une modification dimensionnelle de la surface de membrane en solutions aqueuses de 25% ou moins et une élongation à la rupture selon DIN EN ISO 527-1 et DIN EN ISO 527-3 pour une humidité d'air relative allant de 40 à 50% et à une température de 23 à 25°C, d'au moins 20%, au moins un diglycidyléther d'alcanediol et au moins un glycidyléther de la formule suivante étant utilisés comme agents de réticulation:

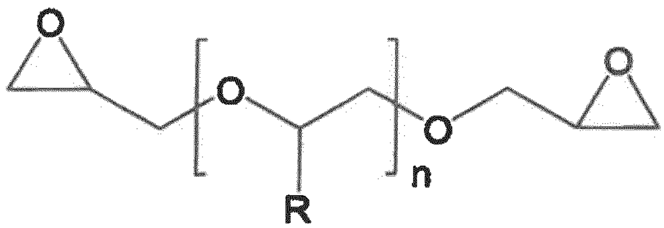

dans laquelle n est de 3 à 50 et R représente l'hydrogène ou un groupement méthyle, et le degré de réticulation et la modification dimensionnelle de la surface de membrane sont déterminés en utilisant le procédé décrit dans la description.

2. Membrane en hydrate de cellulose réticulée non renforcée selon la revendication 1, la membrane en hydrate de cellulose étant une membrane de micro- ou d'ultrafiltration.

3. Membrane en hydrate de cellulose réticulée non renforcée selon la revendication 1 ou 2, laquelle est stérilement filtrante.

4. Membrane en hydrate de cellulose réticulée non renforcée selon l'une des revendications 1 à 3, laquelle est plissée.

5. Procédé de fabrication d'une membrane en hydrate de cellulose réticulée non renforcée selon l'une des revendications 1 à 4, comprenant les étapes suivantes:

- fourniture d'une membrane en hydrate de cellulose; et
- réticulation consécutive de la membrane en hydrate de cellulose par imprégnation avec une solution réticulante et augmentation consécutive de la température,
la réticulation étant réalisée en solution alcaline aqueuse avec au moins deux agents de réticulation différents, sélectionnés parmi les composés diépoxyde, lesquels présentent différents groupes d'écartement entre les groupements époxyde de fin de chaîne, et la réticulation s'effectuant à une température allant de 75°C à 150°C pendant de 0,1 à 60 minutes,
- élimination consécutive des produits de départ excédentaires et produits réactionnels solubles par rinçage en solutions aqueuses et imprégnation consécutive avec une solution de plastifiant; ainsi que
- séchage consécutif de la membrane, le séchage s'effectuant à une température allant de 20°C à 150°C,
au moins un diglycidyléther d'alcanediol et au moins un glycidyléther de la formule suivante étant utilisés comme agents de réticulation:

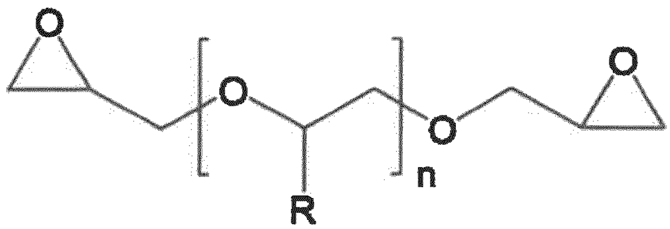

dans laquelle n est de 3 à 50 et R représente l'hydrogène ou un groupement méthyle.

6. Procédé selon la revendication 5, la membrane en hydrate de cellulose étant obtenue par saponification d'une membrane en ester de cellulose en milieu aqueux.

7. Procédé selon la revendication 6, la saponification ayant lieu dans une solution contenant un hydroxyde de sodium, un hydroxyde de potassium et/ou un hydroxyde de lithium.

8. Procédé selon l'une des revendications 5 à 7, la réticulation étant effectuée à une température allant de 80°C à 140°C pendant de 0,5 à 40 minutes.

9. Procédé selon l'une des revendications 5 à 8, comprenant en outre l'étape de plissement de la membrane en hydrate de cellulose réticulée.

10. Utilisation de la membrane en hydrate de cellulose réticulée non renforcée selon l'une des revendications 1 à 4 ou d'une membrane en hydrate de cellulose réticulée non renforcée fabriquée suivant le procédé selon l'une des revendications 5 à 9 destinée à la filtration de milieux aqueux.

Fig. 1a

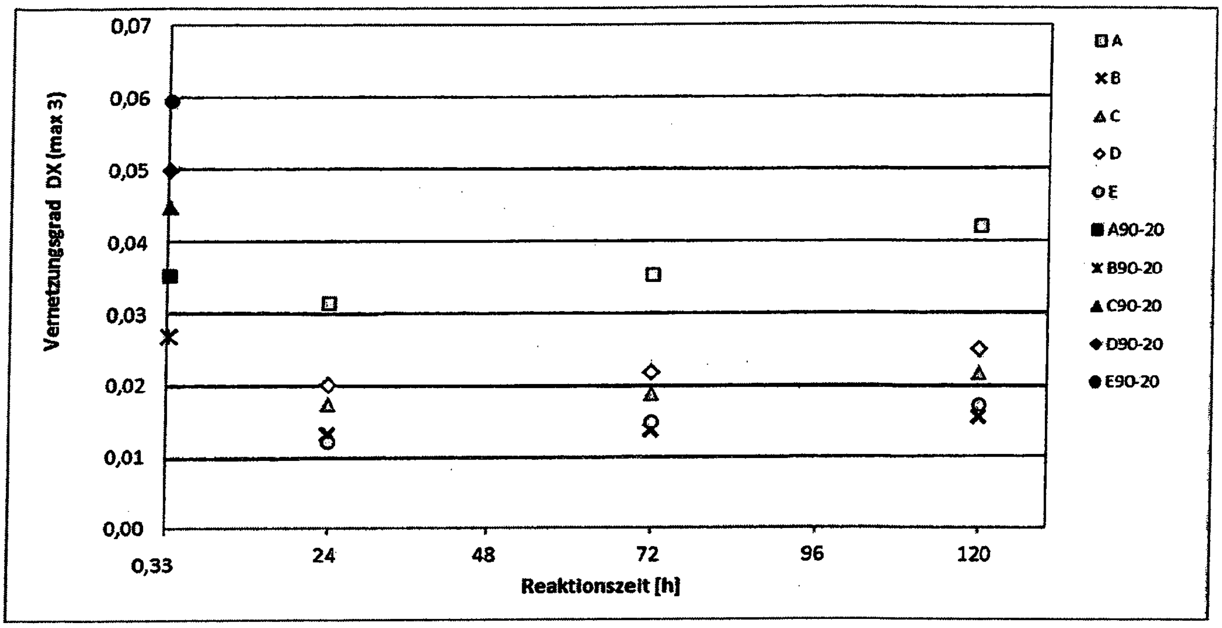
0,07
0,06
0,05
0,04
0,03
0,02
0,01
0,00
Vernetzungsgrad DX (max 3)
0,33
24
48
72
96
120
Reaktionszeit [h]
A
B
C
D
E
A90-20
B90-20
C90-20
D90-20
E90-20

Fig. 1b

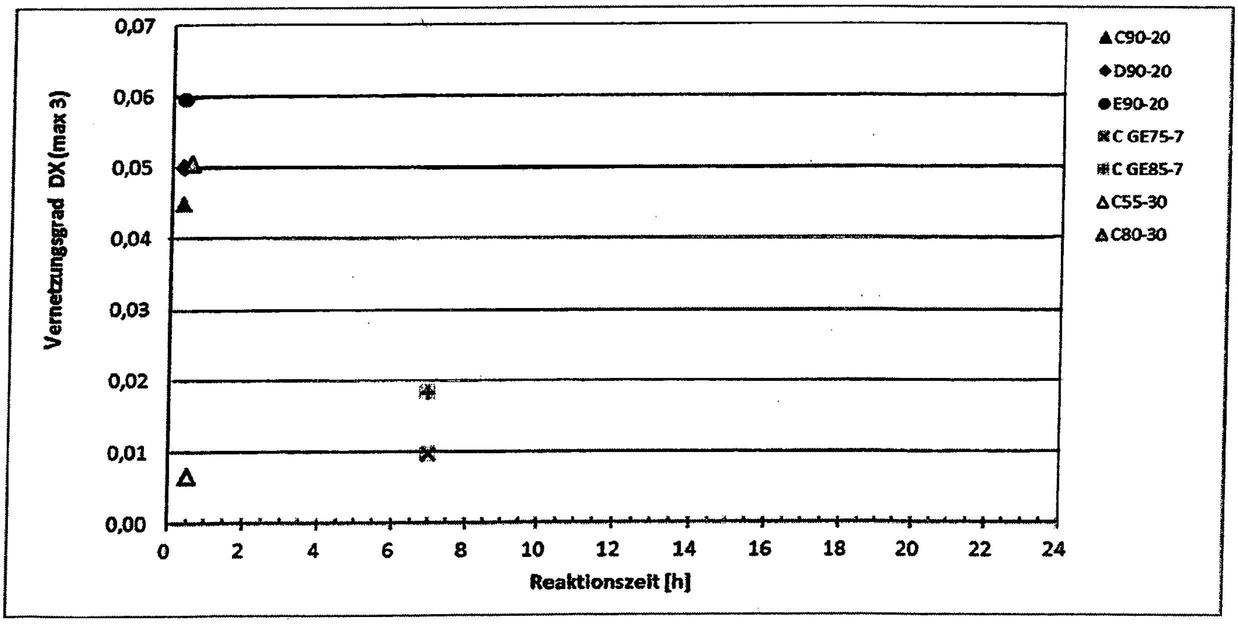
0,07
0,06
0,05
0,04
0,03
0,02
0,01
0,00
Vernetzungsgrad DX (max 3)
0
2
4
6
8
10
12
14
16
18
20
22
24
Reaktionszeit [h]
C90-20
D90-20
E90-20
C GE75-7
C GE85-7
C55-30
C80-30

Fig. 2a

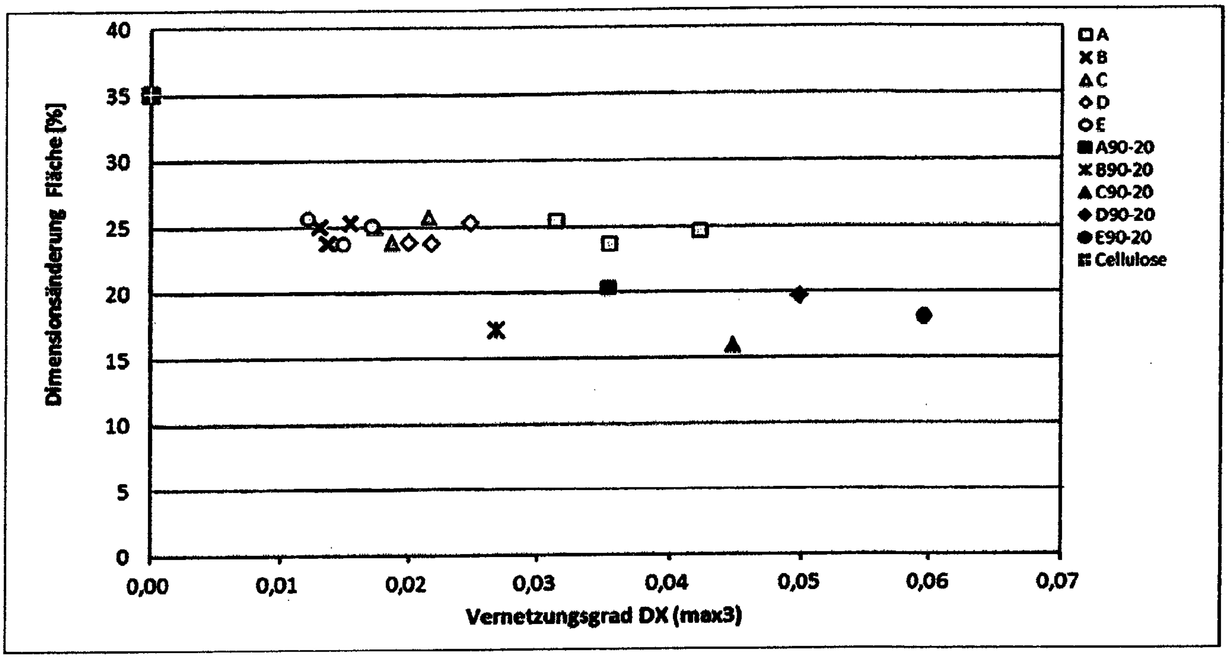
Dimensionsänderung Fläche [%]
Vernetzungsgrad DX (max3)
A
B
C
D
E
A90-20
B90-20
C90-20
D90-20
E90-20
Cellulose

Fig. 2b

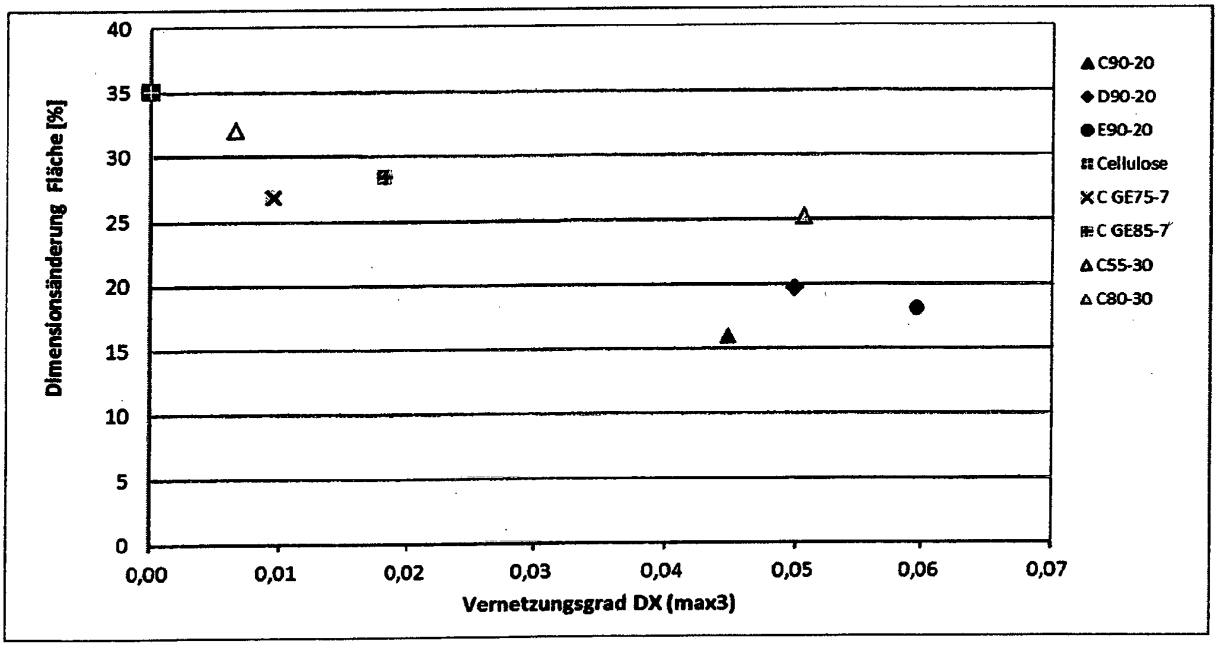
Dimensionsänderung Fläche [%]
Vernetzungsgrad DX (max3)
C90-20
D90-20
E90-20
Cellulose
C GE75-7
C GE85-7
C55-30
C80-30

Fig. 3a

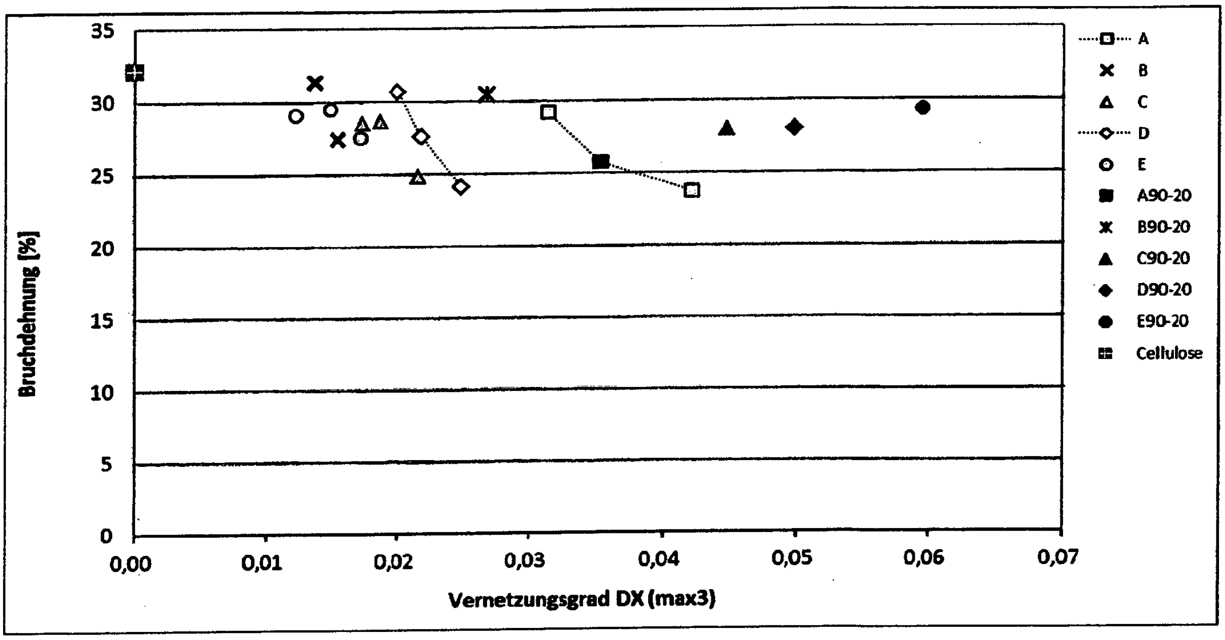
Bruchdehnung [%]
Vernetzungsgrad DX (max3)
A
B
C
D
E
A90-20
B90-20
C90-20
D90-20
E90-20
Cellulose

Fig. 3b

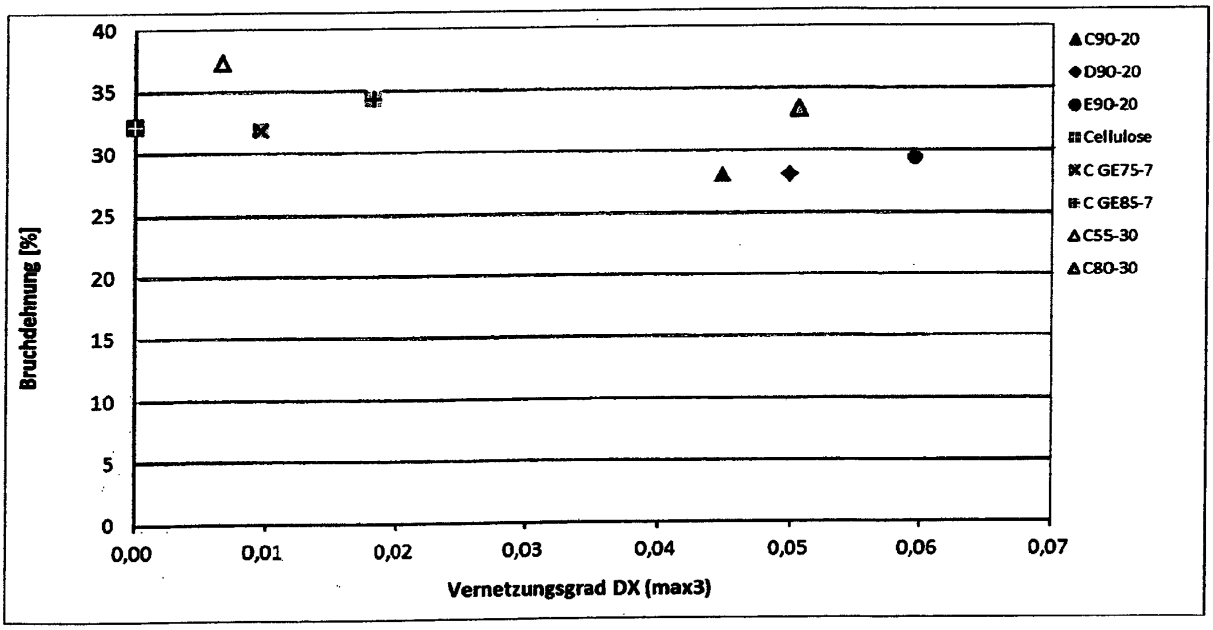
Bruchdehnung [%]
Vernetzungsgrad DX (max3)
C90-20
D90-20
E90-20
Cellulose
C GE75-7
C GE85-7
C55-30
C80-30

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9532793 A1
- WO 2007017085 A2
- US 20080179248 A1
- WO 2008095709 A1
- US 20080245736 A1
- EP 1470854 A1